# FASCICULE DE BREVET EUROPEEN

(11) **EP 4 511 246 B1**
(45) Date de publication et mention de la délivrance du brevet: **28.01.2026**
(21) Numéro de dépôt: 23720866.5
(22) Date de dépôt: 20.04.2023
(51) Int. Cl.: B60K 15/03

(54) **SYSTÈME DE STOCKAGE DE CARBURANT DE VÉHICULE COMPRENANT UNE VESSIE**
KRAFTSTOFFSPEICHERSYSTEM FÜR EIN FAHRZEUG MIT BLASE
VEHICLE FUEL STORAGE SYSTEM INCLUDING BLADDER

(30) Priorité: 21.04.2022 BE 202205299
(43) Date de publication de la demande: 26.02.2025
(73) Titulaire: OPmobility C-Power Belgium Research, 1200 Woluwe-Saint-Lambert (BE)
(72) Inventeur: OSZWALD, Pierre, 1200 Bruxelles (BE); MADOUX, Dominique, 1200 Bruxelles (BE); SHIN, Changwook, 1200 Bruxelles (BE)
(74) Mandataire: LLR
(86) Numéro de dépôt international: PCT/EP2023/060235
(87) Numéro de publication internationale: WO 2023/203117

(56) Documents cités:
- EP-A2- 1 566 535
- WO-A1-01/21991
- CN-A- 112 477 588
- DE-A1- 102015 102 573
- DE-A1- 102017 210 574
- DE-A1- 102018 203 006

## Description

L'invention concerne les réservoirs de carburant de véhicule. Plus particulièrement, l'invention concerne un système de stockage de carburant pour véhicule.

Le carburant stocké dans un réservoir de carburant de véhicule est soumis à des fluctuations de température dépendant principalement de la température extérieure. En fonction du climat auquel est soumis le véhicule, la température du carburant peut grandement varier, en particulier si le véhicule se trouve à l'extérieur lorsqu'il roule et lorsqu'il est stationné. Une élévation en température du carburant stocké dans le réservoir génère une évaporation d'une quantité de celui-ci. Etant donné que le réservoir définit un volume fermé, la génération de vapeur de carburant entraine une élévation de pression dans la phase gazeuse à l'intérieur du réservoir. Une pression élevée en vapeur de carburant génère des contraintes mécaniques sur les parois du réservoir, ce qui peut les détériorer ou à tout le moins constituer un risque d'explosion du réservoir si l'élévation en pression n'est pas maitrisée.

Il est connu dans l'état de la technique, par exemple du document WO 2021/013940 A1, de placer une vessie gonflable à l'intérieur du réservoir à carburant. Cette vessie est connectée à un conduit d'entrée et de sortie d'air sortant du réservoir à carburant et permettant, alternativement, d'alimenter la vessie en air ou d'évacuer une partie de l'air contenu dans la vessie. De la sorte, en fonction de la fluctuation de la quantité de vapeur de carburant dans le réservoir, la vessie peut se gonfler ou se dégonfler pour modifier le volume disponible pour la vapeur de carburant et ainsi limiter les variations de pression en vapeur de carburant. On peut également mentionner le document DE 10 2018 203006 A1 qui divulgue un système de stockage de carburant pour véhicule selon le préambule de la revendication 1.

Ce système à vessie permet bien de réduire le risque d'être confronté à des pics de pression dans le réservoir à carburant, néanmoins il pose certains problèmes. En effet, le volume de la vessie s'entendant à l'intérieur du réservoir à carburant constitue du volume qui ne peut pas être occupé par du carburant, de sorte que la présence de la vessie limite la capacité utile du réservoir. A titre d'exemple, pour un réservoir de carburant de 45 litres, la vessie doit avoir un volume d'environ 20 litres pour avoir un effet bénéfique significatif, ce qui divise quasiment par deux le volume utile du réservoir. De plus, l'important volume de la vessie rend son introduction dans le réservoir complexe à mettre en œuvre lors de la fabrication du réservoir, ce qui implique une augmentation du coût et de la durée de fabrication du réservoir. En outre, la présence de la vessie à l'intérieur du réservoir engendre un biais qui peut fausser la mesure du niveau de carburant dans le réservoir, le biais résidant dans l'incertitude sur la forme prise par la vessie, notamment lorsque celle-ci n'est que partiellement gonflée.

L'invention a notamment pour but de résoudre les problèmes identifiés dans l'état de la technique en limitant la montée en pression de vapeur de carburant dans le réservoir et en évitant ou atténuant les inconvénients posés par la vessie de l'état de la technique et son important volume.

A cet effet, l'invention a pour objet un système de stockage de carburant pour véhicule, comprenant :
- un réservoir à carburant,
- au moins une vessie gonflable s'étendant à l'intérieur du réservoir, et
- au moins un organe de stockage de chaleur, s'étendant à l'intérieur du réservoir, comprenant un matériau à changement de phase présentant un point de fusion compris entre 18° et 40°C.

L'au moins un organe de stockage de chaleur permet d'absorber de la chaleur, en particulier lorsque le carburant présente une température proche du point de fusion du matériau à changement de phase. En effet, la réaction de fusion étant endothermique, elle consomme de la chaleur du carburant. L'au moins un organe de stockage de chaleur permet ainsi de limiter l'élévation en température du carburant et donc de limiter la génération de vapeur de carburant dans le réservoir. Grâce à cette limitation de la génération de vapeur de carburant, on peut dimensionner la vessie avec un volume moins important, de sorte qu'on réduit les inconvénients liés au volume de la vessie, à savoir la limitation du volume utile du réservoir, l'incertitude de mesure du niveau de carburant et la complexité de l'introduction de la vessie dans le réservoir lors de sa fabrication. On comprend ainsi que les effets combinés de l'au moins un organe de stockage de chaleur et de la vessie surpassent les effets procurés par l'au moins un organe de stockage de chaleur et la vessie considérés isolément.

Par ailleurs, des essais ont montré que l'utilisation d'organes de stockage de chaleur est plus efficace pour réduire les élévations de pression en vapeur de carburant dans des réservoirs de carburant de faible volume, tandis que la vessie est plus efficace pour réduire les élévations de pression en vapeur de carburant dans des réservoirs de carburant de volume important. En combinant ces deux technologies, on s'assure d'une certaine efficacité pour réduire les élévations en pression de vapeur de carburant quel que soit le volume du réservoir.

Selon un premier mode de réalisation de l'invention, l'au moins un organe de stockage de chaleur est fixé à une paroi de fond du réservoir.

On s'assure ainsi que l'au moins un organe de stockage de chaleur est immergé dans le carburant tant que le réservoir contient du carburant, et donc que l'au moins un organe de stockage de chaleur reste à tout instant en contact thermique avec le carburant.

Selon un deuxième mode de réalisation de l'invention, l'au moins un organe de stockage de chaleur est fixé sur l'au moins une vessie.

L'au moins un organe de stockage de chaleur donne ainsi du poids à la paroi de la vessie. Cela permet de faciliter l'ouverture de celle-ci lorsqu'on la remplit avec de l'air. Cela contribue également à rompre les vagues de carburant lorsque celui-ci se déplace dans le réservoir lors du déplacement du véhicule, de sorte que l'au moins un organe de stockage de chaleur confère une fonction dite « anti-slosh », ou anti-vague, à la vessie.

Selon un troisième mode de réalisation de l'invention, l'au moins un organe de stockage de chaleur est réalisé sous la forme d'un corps flottant configuré pour flotter sur le carburant dans le réservoir.

L'au moins un organe de stockage de chaleur est alors réalisé sous la forme d'un flotteur. On comprend ainsi qu'aucune étape de fixation de l'organe de stockage de chaleur dans le réservoir n'est à prévoir, ce qui facilite la fabrication du système de stockage de carburant. En outre, on s'assure que l'au moins un organe de stockage de chaleur reste à tout instant en contact thermique avec le carburant.

Avantageusement, le système de stockage de carburant comprend plusieurs organes de stockage de chaleur.

On augmente ainsi la capacité des organes de stockage de chaleur à absorber de la chaleur du carburant. De plus, il est possible de placer les organes à différents emplacements dans le réservoir, ce qui permet d'homogénéiser les échanges de chaleur entre le carburant et les organes de stockage de chaleur, et donc d'homogénéiser la température du carburant. Cela contribue à limiter la génération de vapeur de carburant dans le réservoir.

De préférence, les organes de stockage de chaleur sont fixés sur une plaque de support configurée pour flotter sur le carburant dans le réservoir. Préférentiellement, la plaque de support est équipée de flotteurs.

La plaque permet de maintenir une certaine organisation des organes dans l'espace intérieur du réservoir, ce qui permet d'éviter que tous les organes ne se regroupent localement dans le réservoir. En d'autres termes, la plaque permet de s'assurer que les organes sont bien répartis dans le volume du réservoir.

Avantageusement, le matériau à changement de phase présente un point de fusion compris entre 20° et 30°C.

Le point de fusion se trouve ainsi à une température qui est couramment atteinte par le carburant, de sorte que les organes de stockage de chaleur permettent efficacement de limiter l'élévation en température du carburant lors de la fusion du matériau à changement de phase.

Avantageusement, le matériau à changement de phase est choisi parmi la liste suivante : chlorure de calcium hexahydraté (CaCl₂.6H₂O), octadécane (C₁₈H₃₈), cyclohexanol (C₆H₁₂O), un dérivé de la glycérine.

Ces matériaux présentent des points de fusion proches de 25°C, ce qui les rend particulièrement adaptés à l'invention.

Avantageusement, le système de stockage de carburant comprend plusieurs organes de stockage de chaleur, les organes de stockage de chaleur étant fixés à une paroi de fond du réservoir et/ou fixés sur l'au moins une vessie et/ou réalisés sous la forme de corps flottants configurés pour flotter sur le carburant dans le réservoir.

On peut ainsi combiner les trois modes de réalisation pour placer les organes de stockage de chaleur à différents endroits dans le réservoir, ce qui rend l'invention adaptable à différentes configurations de réservoir.

### Brève description des figures

L'invention sera mieux comprise à la lecture de la description qui va suivre donnée uniquement à titre d'exemple et faite en se référant aux dessins annexés dans lesquels :
[Fig.1] la [Fig.1] est une vue schématique d'un système de stockage de carburant pour véhicule selon un premier mode de réalisation de l'invention,
[Fig.2] la [Fig.2] est une vue schématique d'un système de stockage de carburant pour véhicule selon un deuxième mode de réalisation de l'invention,
[Fig.3] la [Fig.3] est une vue schématique d'un système de stockage de carburant pour véhicule selon une variante de réalisation du deuxième mode de réalisation de l'invention,
[Fig.4] la [Fig.4] est une vue en coupe d'un système de stockage de carburant pour véhicule selon un troisième mode de réalisation de l'invention, et
[Fig.5] la [Fig.5] est une vue en coupe d'un système de stockage de carburant pour véhicule selon une variante de réalisation du troisième mode de réalisation de l'invention.

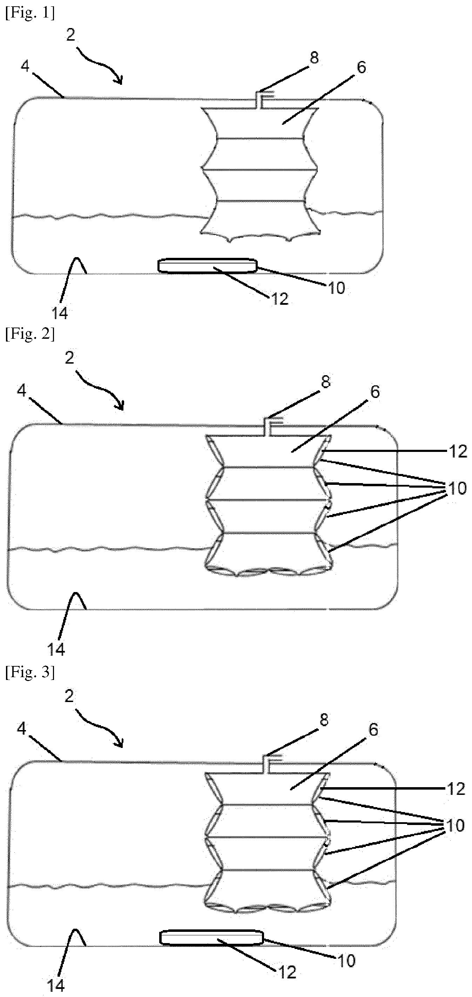

On a représenté en [Fig.1] un système de stockage de carburant pour véhicule 2 selon un premier mode de réalisation de l'invention.

Le système de stockage de carburant 2 comprend un réservoir de carburant 4, généralement réalisé en matière plastique, configuré pour stocker le carburant qui est utilisé par le véhicule notamment pour sa propulsion. Le réservoir 4 définit un volume interne dans lequel s'étend le carburant aussi bien sous forme liquide que sous forme gazeuse, selon une répartition dépendant notamment des conditions de pression et de température à l'intérieur du réservoir 4. Le réservoir comprend généralement un conduit de remplissage, permettant le remplissage du réservoir avec le carburant, un conduit de ventilation permettant l'évacuation des vapeurs de carburant sous certaines conditions et un conduit d'injection permettant d'acheminer le carburant vers le moteur du véhicule. Ces trois conduits sont bien connus de l'état de la technique, de sorte qu'ils ne sont pas représentés sur les figures et ne seront pas décrits davantage dans ce qui suit.

Le système de stockage de carburant 2 comprend une vessie gonflable 6 s'étendant à l'intérieur du réservoir 4. La vessie 6 comprend une paroi déformable élastiquement permettant un gonflage et un dégonflage de celle-ci sans qu'elle ne se déforme plastiquement. A cette fin, le système de stockage de carburant 2 comprend un conduit d'alimentation en air 8 connecté d'une part à la vessie 6 et d'autre part à un système d'alimentation en air (non représenté) situé hors du réservoir 4. Grâce au conduit d'alimentation en air 8, il est possible, alternativement, de remplir la vessie 6 avec de l'air de sorte qu'elle occupe un plus grand volume dans le réservoir 4 et d'évacuer une partie de l'air contenu dans la vessie 6 afin qu'elle occupe un plus petit volume dans le réservoir 4.

Le système de stockage de carburant 2 comprend au moins un organe de stockage de chaleur 10, s'étendant à l'intérieur du réservoir 4, configuré pour échanger de la chaleur avec le carburant. Dans la [Fig.1], le système de stockage de carburant 2 un organe de stockage de chaleur 10, mais il est possible de doter le système de plusieurs organes de stockage de chaleur, par exemple deux ou plus.

L'organe de stockage de chaleur 10 comprend un matériau à changement de phase 12 logé dans une enceinte imperméable à ce matériau et au carburant de sorte que l'enceinte ne permet pas un échange de matière entre le carburant et l'organe de stockage de chaleur 10. En revanche, l'enceinte de l'organe de stockage de chaleur 10 est conductrice de chaleur, de sorte qu'elle permet les échanges de chaleur entre le carburant et le matériau à changement de phase 12. Le matériau à changement de phase 12 présente un point de fusion compris entre 18° et 40°C. A titre d'exemples de réalisation, le matériau à changement de phase est choisi parmi la liste suivante : chlorure de calcium hexahydraté (CaCl₂.6H₂O), octadécane (C₁₈H₃₈), cyclohexanol (C₆ H₁₂O), un dérivé de la glycérine. De manière plus préférentielle, le matériau à changement de phase présente un point de fusion compris entre 20° et 30°C, c'est-à-proche de la gamme de température dans laquelle évolue la température du carburant.

Selon ce mode de réalisation, l'organe de stockage de chaleur 10 est fixé sur une paroi de fond 14 du réservoir 4, du côté intérieur de celui-ci.

Lorsque le carburant monte en température, par exemple lorsque la température extérieure devient supérieure à la température du carburant, une partie du carburant est évaporé, ce qui génère de la vapeur de carburant dans le réservoir 4. Etant donné que le réservoir 4 définit un volume fermé, l'augmentation de la quantité de vapeur de carburant augmente la pression dans la phase gazeuse à l'intérieur du réservoir. On va maintenant décrire comment le système de stockage de carburant 2 selon l'invention permet de limiter cette augmentation de pression.

D'une part, la vessie 6 est comprimée sous l'action de la pression dans la phase gazeuse à l'intérieur du réservoir 4. La paroi de la vessie 6 étant déformable, un équilibre des contraintes s'appliquant sur cette paroi est établi, cet équilibre conduisant à l'évacuation d'une partie de l'air contenu dans la vessie 6 au moyen de la conduite d'alimentation en air 8. De la sorte, le volume de la vessie 6 s'étendant dans le réservoir 4 diminue, et le volume occupé par la vapeur de carburant augmente, ce qui résulte en une diminution de la pression en vapeur de carburant. Lorsque la température du carburant finit par diminuer, par exemple lorsque la température extérieure devient inférieure à la température du carburant, une partie de la vapeur de carburant se condense. La quantité de vapeur de carburant dans le réservoir diminue alors, ainsi que la pression en vapeur de carburant. Un nouvel équilibre des contraintes sur la paroi de la vessie est établi, cet équilibre conduisant à un remplissage de vessie 6 au moyen de la conduite d'alimentation en air 8 et à une augmentation du volume de la vessie 6 s'étendant dans le réservoir 4.

D'autre part, l'organe de stockage de chaleur 10 possède une capacité thermique qui lui permet d'absorber une partie de la chaleur du carburant. Lorsque la température de l'organe de stockage de chaleur 10 atteint le point de fusion du matériau à changement de phase 12, ce matériau commence à fondre. La réaction de fusion étant endothermique, le matériau à changement de phase 12 absorbe de la chaleur du carburant pour alimenter cette réaction, ce qui permet de limiter l'élévation en température du carburant. En d'autres termes, on limite l'augmentation de pression en vapeur de carburant dans le réservoir en limitant l'augmentation en température du carburant.

On a représenté en [Fig.2] un système de stockage de carburant pour véhicule 2 selon un deuxième mode de réalisation de l'invention. Sur cette figure, les éléments analogues à ceux de la figure précédente sont désignés par des références identiques.

Le système de stockage de carburant pour véhicule 2 de la [Fig.2] diffère de celui de la [Fig.1] en ce qu'il comprend plusieurs organes de stockage de chaleur 10 et qu'ils sont tous fixés sur la paroi de la vessie 6. Cette configuration contribue à faciliter le déploiement de la vessie lorsqu'elle se remplit d'air et à rompre les vagues de carburant lorsque celui-ci se déplace dans le réservoir lors du déplacement du véhicule, de sorte que les organes de stockage de chaleur 10 confèrent une fonction dite « anti-slosh », ou anti-vague, à la vessie 6.

On a représenté en [Fig.3] un système de stockage de carburant pour véhicule 2 selon une variante de réalisation du deuxième mode de réalisation de l'invention. Sur cette figure, les éléments analogues à ceux des figures précédentes sont désignés par des références identiques.

Le système de stockage de carburant pour véhicule 2 de la [Fig.3] diffère de celui de la [Fig.2] en ce qu'il comprend en outre au moins un organe de stockage de chaleur 10 fixé sur la paroi de fond 14 du réservoir, en plus de ceux fixés sur la paroi de la vessie 6. On obtient ainsi les effets techniques conférés par ces deux positions des organes de stockage de chaleur présentés dans ce qui précède.

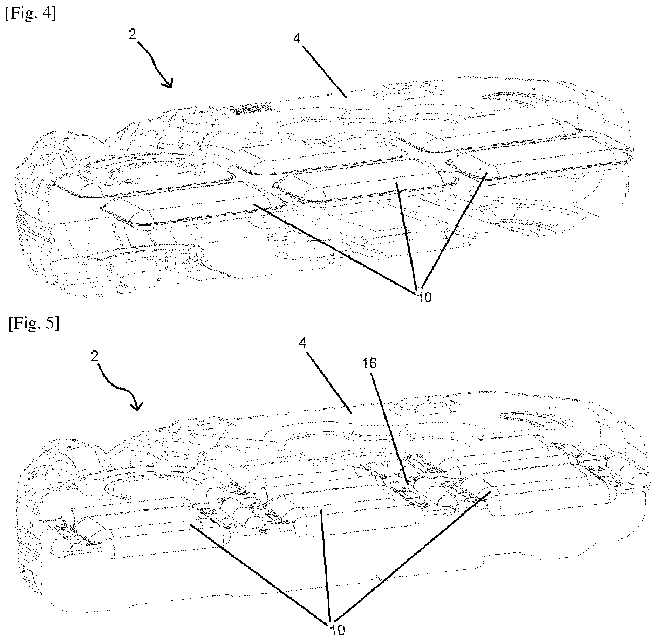

On a représenté en [Fig.4] un système de stockage de carburant pour véhicule 2 selon un troisième mode de réalisation de l'invention. Sur cette figure, les éléments analogues à ceux des figures précédentes sont désignés par des références identiques.

Le système de stockage de carburant pour véhicule 2 de la [Fig.4] diffère de celui des figures précédentes en ce qu'il comprend plusieurs organes de stockage de chaleur 10 réalisés sous la forme de corps flottants configurés pour flotter sur le carburant dans le réservoir 4. On s'assure de la sorte que les organes de stockage de chaleur 10 sont en permanence en contact avec le carburant et donc en mesure d'échanger efficacement de la chaleur avec le carburant. La vessie et la conduite d'alimentation en air n'ont pas été représentées sur la [Fig.4] pour des raisons de lisibilité de la figure, mais le système de stockage de carburant pour véhicule 2 comporte bien la vessie et la conduite d'alimentation en air telles que présentées dans ce qui précède.

On a représenté en [Fig.5] un système de stockage de carburant pour véhicule 2 selon une variante de réalisation du troisième mode de réalisation de l'invention. Sur cette figure, les éléments analogues à ceux des figures précédentes sont désignés par des références identiques.

Le système de stockage de carburant pour véhicule 2 de la [Fig.5] diffère de celui de la [Fig.4] en ce que les organes de stockage de chaleur sont fixés sur une plaque de support 16 configurée pour flotter sur le carburant dans le réservoir 4. En plus d'assurer un bon contact thermique entre les organes de stockage de chaleur 10 et le carburant, la plaque de support 16 permet de s'assurer que les organes de stockage de chaleur 10 sont bien répartis dans le volume du réservoir 4 et non pas concentrés dans une zone de celui-ci. Cela permet d'éviter qu'une partie du carburant, éloignée des organes de stockage de chaleur 10, présente une température plus élevée que le reste du carburant, ce qui pourrait entrainer la génération de vapeur de carburant. La vessie et la conduite d'alimentation en air n'ont pas été représentées sur la [Fig.5] pour des raisons de lisibilité de la figure, mais le système de stockage de carburant pour véhicule 2 comporte bien la vessie et la conduite d'alimentation en air telles que présentées dans ce qui précède.

L'invention n'est pas limitée aux modes de réalisation présentés et d'autres modes de réalisation apparaîtront clairement à l'homme du métier. Il est notamment possible de combiner chacun des modes de réalisations et variantes de réalisation présentés dans ce qui précède, en particulier de combiner les différentes positions et configurations des organes de stockage de chaleur.

### Liste de références

2 : système de stockage de carburant
4 : réservoir
6 : vessie
8 : conduite d'alimentation en air
10 : organe de stockage de chaleur
12 : matériau à changement de phase
14 : paroi de fond
16 : plaque de support

## Revendications

1. Système de stockage de carburant (2) pour véhicule, comprenant :
- un réservoir à carburant (4), et
- au moins une vessie gonflable (6) s'étendant à l'intérieur du réservoir (4),
**caractérisé en ce qu'**il comprend en outre au moins un organe de stockage de chaleur (10), s'étendant à l'intérieur du réservoir (4), comprenant un matériau à changement de phase (12) présentant un point de fusion compris entre 18° et 40°C.

2. Système de stockage de carburant (2) selon la revendication 1, dans lequel l'au moins un organe de stockage de chaleur (10) est fixé à une paroi de fond (14) du réservoir (4).

3. Système de stockage de carburant (2) selon la revendication 1, dans lequel l'au moins un organe de stockage de chaleur (10) est fixé sur l'au moins une vessie (6).

4. Système de stockage de carburant (2) selon la revendication 1, dans lequel l'au moins un organe de stockage de chaleur (10) est réalisé sous la forme d'un corps flottant configuré pour flotter sur le carburant dans le réservoir (4).

5. Système de stockage de carburant (2) selon l'une quelconque des revendications précédentes, comprenant plusieurs organes de stockage de chaleur (10).

6. Système de stockage de carburant (2) selon les revendications 4 et 5, dans lequel les organes de stockage de chaleur (10) sont fixés sur une plaque de support (16) configurée pour flotter sur le carburant dans le réservoir (2).

7. Système de stockage de carburant (2) selon l'une quelconque des revendications précédentes, dans lequel le matériau à changement de phase (12) présente un point de fusion compris entre 20° et 30°C.

8. Système de stockage de carburant (2) selon l'une quelconque des revendications précédentes, dans lequel le matériau à changement de phase (12) est choisi parmi la liste suivante : chlorure de calcium hexahydraté (CaCl₂.6H₂O), octadécane (C₁₈H₃₈), cyclohexanol (C₆H₁₂O), un dérivé de la glycérine.

## Patentansprüche

1. Kraftstoffspeichersystem (2) für Fahrzeug umfassend:
- einen Kraftstofftank (4) und
- mindestens eine aufblasbare Blase (6), die sich im Inneren des Tanks (4) erstreckt,
**dadurch gekennzeichnet, dass** es ferner mindestens ein Wärmespeicherorgan (10) umfasst, das sich im Inneren des Tanks (4) erstreckt und ein Phasenwechselmaterial (12) umfasst, das einen Schmelzpunkt zwischen 18 ° und 40 °C aufweist.

2. Kraftstoffspeichersystem (2) nach Anspruch 1, wobei das mindestens eine Wärmespeicherorgan (10) an einer Bodenwand (14) des Tanks (4) befestigt ist.

3. Kraftstoffspeichersystem (2) nach Anspruch 1, wobei das mindestens eine Wärmespeicherorgan (10) an der mindestens einen Blase (6) befestigt ist.

4. Kraftstoffspeichersystem (2) nach Anspruch 1, wobei das mindestens eine Wärmespeicherorgan (10) in Form eines Schwimmkörpers realisiert ist, der so ausgebildet ist, dass er auf dem Kraftstoff in dem Tank (2) schwimmt.

5. Kraftstoffspeichersystem (2) nach einem der vorhergehenden Ansprüche, umfassend mehrere Wärmespeicherorgane (10).

6. Kraftstoffspeichersystem (2) nach Anspruch 4 und 5, wobei die Wärmespeicherorgane (10) an einer Trägerplatte (16) befestigt sind, die so ausgebildet ist, dass sie auf dem Kraftstoff in dem Tank (2) schwimmt.

7. Kraftstoffspeichersystem (2) nach einem der vorhergehenden Ansprüche, wobei das Phasenwechselmaterial (12) einen Schmelzpunkt zwischen 20 ° und 30 °C aufweist.

8. Kraftstoffspeichersystem (2) nach einem der vorhergehenden Ansprüche, wobei das Phasenwechselmaterial (12) aus der folgenden Liste ausgewählt ist: Calciumchlorid-Hexahydrat (CaCl₂•6H₂0), Octadecan (Ci₁₈H₃₈), Cyclohexanol (C₆H₁₂O), ein Glycerin-Derivat.

## Claims

1. A fuel storage system (2) for a vehicle, comprising:
- a fuel tank (4), and
- at least one inflatable bladder (6) extending inside the tank (4),
**characterized in that** it comprises at least one heat storage member (10), extending inside the tank (4), comprising a phase-change material (12) with a melting point between 18° and 40°C.

2. The fuel storage system (2) according to claim 1, wherein the at least one heat storage member (10) is attached to a bottom wall (14) of the tank (4).

3. The fuel storage system (2) according to claim 1, wherein the at least one heat storage member (10) is attached to the at least one bladder (6).

4. The fuel storage system (2) according to claim 1, wherein the at least one heat storage member (10) is constructed as a floating body configured to float on the fuel in the tank (4).

5. The fuel storage system (2) according to any of the preceding claims, comprising several heat storage members (10).

6. The fuel storage system (2) according to claims 4 and 5, wherein the heat storage members (10) are attached to a support plate (16) configured to float on the fuel in the tank (2).

7. The fuel storage system (2) according to any of the preceding claims, wherein the phase-change material (12) has a melting point between 20° and 30°C.

8. The fuel storage system (2) according to any of the preceding claims, wherein the phase-change material (12) is selected from the following list: calcium chloride hexahydrate (CaCl₂.6H₂O), octadecane (C₁₈H₃₈), cyclohexanol (C₆H₁₂O), a glycerine derivative.
